(19) **Europäisches Patentamt / European Patent Office / Office européen des brevets**

(11) **EP 4 158 420 B1**

(12) # EUROPEAN PATENT SPECIFICATION

(45) Date of publication and mention
of the grant of the patent:
**24.12.2025 Bulletin 2025/52**

(21) Application number: **21727450.5**

(22) Date of filing: **19.05.2021**

(51) International Patent Classification (IPC):
**G02C 13/00** (2006.01)  **G06Q 30/06** (2023.01)
**G06Q 30/0601** (2023.01)

(52) Cooperative Patent Classification (CPC):
**G02C 13/003; G06Q 30/0631**

(86) International application number:
**PCT/EP2021/063283**

(87) International publication number:
**WO 2021/239539 (02.12.2021 Gazette 2021/48)**

(54) **METHODS AND DEVICES FOR SPECTACLE FRAME SELECTION**

VERFAHREN UND VORRICHTUNGEN ZUR AUSWAHL VON BRILLENGESTELLEN

PROCÉDÉS ET DISPOSITIFS POUR LA SÉLECTION DE MONTURE DE LUNETTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2020 EP 20177421**

(43) Date of publication of application:
**05.04.2023 Bulletin 2023/14**

(73) Proprietor: **Carl Zeiss Vision International GmbH
73430 Aalen (DE)**

(72) Inventors:
• **HOYLE, Ben
81927 München (DE)**
• **HUBER, Korbinian
86150 Augsburg (DE)**

(74) Representative: **Kraus & Lederer PartGmbB
Thomas-Wimmer-Ring 15
80539 München (DE)**

(56) References cited:
WO-A1-2016/109884     US-A1- 2001 051 953
US-A1- 2009 043 597     US-A1- 2013 006 814
US-A1- 2016 012 511

• **DISSERTATION ET AL: "Face Image Analysis With Convolutional Neural Networks", 1 January 2007 (2007-01-01), XP055168388, Retrieved from the Internet <URL:http://lmb.informatik. uni-freiburg.de/papers/download/du_diss.pdf> [retrieved on 20150209]**
• **ZHAO FENG ET AL: "Multi-view face recognition using deep neural networks", FUTURE GENERATION COMPUTER SYSTEMS, ELSEVIER SCIENCE PUBLISHERS. AMSTERDAM, NL, vol. 111, 15 May 2020 (2020-05-15), pages 375 - 380, XP086190332, ISSN: 0167-739X, [retrieved on 20200515], DOI: 10.1016/J.FUTURE.2020.05.002**
• **XIAOLING GU ET AL: "iGlasses : A Novel Recommendation System for Best-fit Glasses", PROCEEDINGS OF THE 39TH INTERNATIONAL ACM SIGIR CONFERENCE ON RESEARCH AND DEVELOPMENT IN INFORMATION RETRIEVAL, SIGIR '16, PISA, ITALY, JULY 17 - 21, 2016, 21 July 2016 (2016-07-21), New York, New York, USA, pages 1109 - 1112, XP055588771, ISBN: 978-1-4503-4069-4, DOI: 10.1145/ 2911451.2911453**
• **EDWIN COSTELLO ET AL: "i CARE: Intelligent Customer Assistance for Recommending Eyewear *", IUI '06 PROCEEDINGS OF THE 11TH INTERNATIONAL CONFERENCE ON INTELLIGENT USER INTERFACES, 1 February 2006 (2006-02-01), pages 282 - 284, XP055588775**

## Description

The present application relates to methods and devices related to selection of spectacle frames for a person.

Spectacle frames are defined in detail in DIN ISO 8624: 2011 and are used to carry spectacle lenses. Spectacle frames will be shortly referred to as frames in the following.

Traditionally, selecting a frame for a person is a time-consuming process. The person needs to go to an optician and try on a plurality of frames until the person finds a frame which has a good anatomical fit. Besides the anatomical fit, also personal preferences of the person may play a role. An experienced optician may shorten the process based on his past experience with selling frames, his knowledge about frame sizes and measurement of the person's head. Selecting appropriate frames is even more difficult in online shopping systems, where no such experienced optician is present.

Various approaches for selecting frames and fitting frames to a person are known.

In US 2013 / 0 088 490 a three-dimensional scan of a person's face is performed. Furthermore, frames are provided as a 3D model. The 3D model is then virtually fitted to the 3D scan of the face. Frames may then be recommended based on determining if temple pieces of the frames are long enough to get over the ear of the person and if a flexibility of the frame is too great or too small. This approach requires a precise 3D scan of the person's head, which in turn requires rather complex hardware.

US 2013 / 0 132 898 A1 discloses a method for frame selection. Photos of individuals wanting to buy a frame can be taken or uploaded, and frames may be simulated or merged into photos and shared via a network connection. In this way, the person sees how he looks wearing the frame. While this helps to see how the person looks wearing the frame, it still requires an initial selection of a frame from all available frames. To partially remedy this, the method disclosed may prompt additional person information like person lifestyle and activities, personal style preference, glasses prescription for the person and the like. This requires the person to input additional data about himself or herself.

US 5 592 248 A discloses a method where a series of images from a person wearing frames is taken and where additional head shape measurements of the person are taken. The images and the measurements are used to reconstruct a 3D model of the user. Frames are then recommended based on a fitting criterion and placed on the 3D model of the person's head. This approach requires detailed measurements, in particular a series of images and in addition head shape measurements.

US 9 810 927 B1 describes a method in which frames are fully customized from sets of existing templates and tailored to fit each person. While this allows an anatomically accurate fit, it is limited to frames which may be customized using such templates. Conventional frames which are provided only in one or more specific sizes cannot be handled by this method.

US 5 983 201 A discloses a system and method enabling shopping from home for fitted frames. Here, size and image information of a person is provided, where the customer's face is characterized as a basic shape selected from a predetermined group of basic shapes. Images are then provided to the person showing how the person would actually appear wearing different frames. Also here, relatively complex diagnostics of the person regarding size are required.

WO 2016 / 109 884 A1 discloses a method to make frame recommendations based on the analysis of an image of a person to extract human understandable facial landmarks which are used to estimate the face shape of the person. Both expert and non-expert recommendation information as well as information from social media or purchasing histories of the person may be used for recommending a frame.

In US 2011 / 0 314 031 A1 a method is described using a weighted combination of attributes including color, shape, pattern, brand, style, size and material to rank items such as frames when searching for similar items of a given category. Xiaoling Gu et al. "iGlasses: A Novel Recommendation System for Best-fit Glasses", Proceedings of the 39th international ACM SIGIR Conference on Research and Development in Information Retrieval, SIGIR '16, PISA, ITALY, July 17-21, 2016, 21 July 2016, pages 1109ß1112, XP055588771, New York, New York, USA is also directed to a method which uses the correlation between the respective face and frame feature attributes and recommends frames based on the detailed information of the person predicted from the frame feature attributes. Here, detailed information needs to be input for frame selection.

EP 3 182 362 A1 discloses a method for evaluating a fitness between an eyeglasses wearer and eyeglasses worn by the wearer. This method is restricted to eyeglasses and does not relate to frame selection, and in addition is restricted to an aesthetic evaluation. However, while aesthetics is important to customers, a comfortable fit of the frames is also an important requirement.

Edwin Costello et al. "i CARE: Intelligent Customer Assistance for Recommending Eyewear", Proceedings of the 11th International Conference on Intelligent User Interfaces, 1 February 2006, pages 282-284, XP055588775, discloses an intelligent customer assistance system for recommending eyeglasses, wherein a user's facial features are analyzed based on an uploaded image, and recommendations are iteratively refined based on visual preference feedback. The system includes a visualization component that virtually overlays selected frames onto the user's image to simulate a try-on experience.

US 2013 / 006 814 A1 discloses a glasses selling system in which a customer selects eyeglass frames and lenses based on a combined image generated from selected frame and lens images and a captured image of the customer's face. The system includes a selling server that communicates with optometrist, lens, and frame company terminals, stores prescription data, transmits candidate images to the customer, and processes purchase requests based on the combined image.

US 2001/051953 A1 discloses a database constructing system in which data for associating personal goods to wear or carry such as handbags, accessories, eye glass frame and shoes which a person likes, with personal characteristics can be collected to build a database. The document further describes an eyeglass frame selecting service system and an eye test service system that enables a user to virtually try on eyeglass frames at home.

Zhao Feng et al. "Multi-view face recognition using deep neural networks" Future Generation Computer Systems, Elsevier Science Publishers. Amsterdam, NL, vol. 111, 15 May 2020 (2020-05-15), pages 375-380, XP086190332, discloses a face recognition system using convolutional neural networks (CNN) for feature extraction, principal component analysis (PCA) for dimensionality reduction, and a joint Bayesian method for similarity evaluation. The system is designed to robustly handle multi-view face recognition and resist common face presentation attacks.

Stefan Duffner, Dissertation: "Face Image Analysis With Convolutional Neural Networks", 1 January 2007 (2007-01-01), XP055168388, discloses automatic appearance-based facial analysis using CNN-based machine learning techniques. The document addresses specific subproblems such as face detection, facial feature detection, and face recognition, and further proposes CNN-based methods for face alignment, facial feature point detection, and face recognition based on a non-linear mapping into a lower-dimensional subspace.

Therefore, starting from US 2013 / 0 088 490 which recommends frames, it is an object to provide methods and devices for providing a frame recommendation which does not require extensive measurements of or detailed information about the person and/or frames. No prior knowledge about the person, for example previous frames used, should be required, such that the methods and devices are also applicable if a frame is bought for the first time by the respective person. The recommended frames should have a good probability of anatomically fitting the person.

A computer-implemented method for configuring a device as defined in claim 1, and corresponding devices and computer programs are provided. The dependent claims define further embodiments.

A computer-implemented method for configuring a device for frame recommendation to recommend a frame with a good physical fit for a person is provided, comprising: providing frame data for a plurality of frames, providing head data for a plurality of heads, and recommending the frame for a head of the person based on a probability between the head data and the frame data, characterized by providing a plurality of head data clusters, wherein a head data cluster is a group of head data grouped together based on a similarity criterion; providing a plurality of frame data clusters, wherein a frame data cluster is a group of frame data from different frames grouped together based on another similarity criterion; providing a mapping between the head data clusters and the frame data clusters, identifying one of the head data clusters based on head data of the person, and selecting the frame from the frame data cluster mapped with the identified head data cluster, wherein providing the plurality of frame data clusters comprises: compressing the frame data; and clustering the compressed frame data based on the another similarity criterion to provide the plurality of frame data clusters, further characterized in that compressing the frame data comprises: compressing the frame data using a principal component analysis, wherein the another similarity criterion is that frame data is identified as belonging to the same cluster if a deviation for lower order coefficients resulting from the principal component analysis is below a predefined threshold.

Terms used in the above method are defined as follows:

A frame, as mentioned initially, refers to a spectacle frame as defined for example in DIN ISO 8624: 2011 - 05. Additionally, such a frame may or may not include lenses. In other words, the present invention may be used for recommending frames without lenses or for recommending frames including lenses.

The term "frame data" refers to data characterizing the frame and optionally other properties of the frame like shape, color, etc. of the frame. Frame data may for example include two-dimensional (2D) or three-dimensional (3D) image data or computer-aided design (CAD) data provided by a frame manufacturer. In one embodiment, based on the frame data, shape, color, material, thickness, size, length and/or fit, etc. of rims, temples, nose bridge, top bar, nose pads, temple tips and/or pad arms, etc. may be inferred. As will be explained below in more detail, the frame data may also be compressed data derived for example from 2D or 3D images or from CAD data.

A cluster, as used herein, refers to a group of items grouped together based on a similarity criterion. A frame data cluster refers to a group of frame data from different frames grouped together based on the similarity of the frames to each other. Examples of such a similarity criterion will be discussed below. In case of the compressed head data, a cluster refers to a group of head data grouped together based on similarity criteria provided by the respective compression method. Application of clustering enables recommendation and selection of the frames which fit to the person's head to be done without extensive measurement of or prediction of detailed information about the head or frames.

Head data refers to data characterizing a head of a person, in particular the face thereof. For example, the head data may include a 2D frontal image of the head or a 3D image of the head. In one embodiment, from the head data, features of the head such as race, gender, skin color, face shape, head shape, eyebrow shape, eyebrow color, eye shape, eye size, eye color, nose shape, nose size, lip color, lip shape, hair color and/or hair length, etc. of a person may be deduced. In one embodiment, biometric data of the head may be also inferred from the head data. Biometric data of the head is understood here as data describing biological properties of the head, in particular, measurements such as lengths, sizes, distances and ratios on the head, e.g., pupil distance, nose bridge width, and/or ear distance, etc. Also here, compressed data may be used. A head data cluster, correspondingly, refers to a group where head data is grouped together based on a similarity criterion, such that similar-looking heads are grouped together in the same cluster. In case of the compressed head data, a head cluster refers to a group of head data grouped together based on similarity criteria provided by the respective compression method.

A mapping links head data clusters to frame data clusters. The mapping may indicate a probability that a frame represented by frame data of the frame data cluster is suitable for a head represented by head data of the head data cluster. Through mapping of the head and frame clusters, the present invention enables frame recommendation and selection to be made without the need to provide, predict, or confirm detailed information about the person or the frames. Possibilities for establishing such a mapping will be discussed further below.

As discussed further below, with a device thus configured frames may be recommended to a person based on head data of the person which may take the form of a simple 2D image alone, without additional measurements being required and also for first time buyers of a frame, i.e. without a need for historical knowledge.

Providing the frame data may for example be performed by taking 2D images of frames using cameras, providing 3D images of frames using 3D scanners, or by obtaining computer-aided design (CAD) data from frame manufacturers. 2D images from other sources like the internet may also be used, as long as the type of frame (e.g. manufacturer, type etc.) can be linked to the image.

Compressing relates to an operation reducing the dimensionality or amount of the frame data. Using such compression, for example a frame may be represented by less than 100 values, for example about 30 values, while the frame data itself may e.g. be an image of some Megapixels size. Various approaches for compressing frame data may be used. Supervised or unsupervised data compression method, in particular unsupervised data compression method which requires less detailed information of person or frames, for example, using low-level features such as edges or pixel attributes, may be used.

The data compression method may include deep machine learning and the use of convolutional neural networks, T-distributed stochastic neighbor embedding, random forest, spectral embedding and principal component analysis, in particular multi-dimensional principal component analysis. T-distributed stochastic neighbor embedding is described for example in L.J.P. van der Maaten and G.E. Hinton. Visualizing High-Dimensional Data Using t-SNE. Journal of Machine Learning Research 9(Nov):2579-2605, 2008. Principal component analysis is described in Jian Yang, D. Zhang, A. F. Frangi and Jing-yu Yang, "Two-dimensional PCA: a new approach to appearance-based face representation and recognition," in IEEE Transactions on Pattern Analysis and Machine Intelligence, vol. 26, no. 1, pp. 131-137, Jan. 2004, doi: 10.1109/TPAMI.2004.1261097 or Pearson, K. (1901). "On Lines and Planes of Closest Fit to Systems of Points in Space". Philosophical Magazine. 2 (11): 559-572. doi:10.1080/14786440109462720.Random forests are described in Breiman L (2001). "Random Forests". Machine Learning. 45 (1): 5-32. doi:10.1023/A:1010933404324. Spectral embedding is described in "Laplacian Eigenmaps for Dimensionality Reduction and Data Representation" M. Belkin, P. Niyogi, Neural Computation, June 2003; 15 (6):1373-1396 . The use of convolutional neural networks for compression is described in Kramer, Mark A. (1991). "Nonlinear principal component analysis using autoassociative neural networks" (PDF). AIChE Journal. 37 (2): 233-243. doi:10.1002/aic.690370209. A convolutional neural network may compress data using a plurality of neural network layers, where each layer compresses the data further. The convolutional neural network compression method is not part of the claimed subject-matter.

For training such a network, a decompression path from the compressed state may be provided, and the network may be trained such that after compression followed by decompression, essentially the original data results. The thus obtained compressed state may consist of a plurality of numerical values (for example about 30 values). While these values characterize the input (for example, the original data may be recovered via decompression with some error remaining), it is usually not possible to immediately identify the individual numerical values with some property of the input or vice versa.

According to the invention, the frame data is compressed using a principal component analysis. In principal component analysis, essentially the frame is represented by a linear combination of a plurality of templates (the principal components). Lower order templates define the rough shape, whereas higher order templates may be responsible for finer details of the shape. Generally, the more templates are used the better the approximation is. The coefficients of this linear combination then form the compressed data. A principal component analysis of frame data is for example described in Szu-Hao Huang et al., Advanced Engineering Informatics, vol. 21, No. 1, pp. 35-45.

After the compression of the frame data, clustering is performed. The similarity criterion when clustering then depends on the type of compression. Algorithms which may be employed for this purpose include DBSCAN, Gaussian mixture models or k-means clustering. DBSCAN is described for example in "A Density-Based Algorithm for Discovering Clusters in Large Spatial Databases with Noise" Ester, M., H. P. Kriegel, J. Sander, and X. Xu, In Proceedings of the 2nd International Conference on Knowledge Discovery and Data Mining, Portland, OR, AAAI Press, pp. 226-231. 1996.

Gaussian mixture models are described in McLachlan, G.J.; Basford, K.E. (1988), "Mixture Models: inference and applications to clustering", Statistics: Textbooks and Monographs, Bibcode:1988mmia.book.....M, and k-means clustering is for example described in MacQueen, J. B. (1967). Some Methods for classification and Analysis of Multivariate Observations. Proceedings of 5th Berkeley Symposium on Mathematical Statistics and Probability. 1. University of California Press. pp. 281-297. MR 0214227.

To give simple examples, for the above-mentioned compression using convolutional neural networks, the compressed data may be seen as points in an n-dimensional space, where n is the number of numerical values resulting from the compression, and the clustering may be performed based on a distance between the points in the n-dimensional space. For instance, the points that are close to one another are grouped as a single cluster. As a metric for determining if points are close to each other the Euclidian distance in the n-dimensional space may be used, i.e. the square root of the sums of n squares of the respective coordinate differences between two points in n dimensional space. In case of a principal component analysis, data such as the frame data may be identified as belonging to the same clusters if there is no or little deviation between lower order coefficients (for example, deviations below a predefined threshold), whereas for higher order coefficients which, as explained above, represent finer details of the frames, higher deviations may be allowed (or for example for some highest order coefficients no threshold is given). The frame data is identified as belonging to the same cluster if a deviation for lower order coefficients resulting from the principal component analysis is below a predefined threshold.

This method may also be applied to other items, for example other eyewear-related items like eyeglasses.

This separate embodiment may be combined with the other embodiments discussed herein, to find similar frames once a frame has been selected using techniques discussed herein.

Similarly, preferably providing a plurality of head data clusters comprises:

> providing head data for a plurality of heads,
> compressing the head data, and
> clustering the compressed head data based on a similarity criterion to provide the head data clusters.

The providing, compressing and clustering for the head data may be performed as explained above for the frame data. The compressing of head data may also be performed using other above-explained compression methods like a convolutional neural network. As head data, 2D images are preferred, as in later use 2D images of a head of a person can be easily taken and associated with a cluster, as will be described below when methods of using such a frame selection device will be discussed.

Providing the mapping between the head data clusters to the frame data clusters may comprise assigning estimated probabilities or probability distributions for pairs of head data cluster and frame data cluster. "Estimated" indicates that these usually are not based on exact measurements. The probabilities or probability distributions indicate a likelihood that a frame from a respective frame data cluster is suitable for a head of a respective head data cluster. For example, if head data clusters A, B, C and frame data clusters 1, 2, 3 are given, $p(A,1)$ would indicate a probability or probability distribution that a frame from frame data cluster 1 is suitable for a head of head data cluster A. Similar probabilities or probability distributions may be assigned to other pairs of head data clusters and frame data clusters, i.e. $p(A,2)$, $p(A,3)$, $p(B,1)$ etc. It should be noted that using three head data clusters and three frame data clusters in the example above is only for illustration purposes, and depending on the amount of head data and frame data available different numbers of clusters may be provided.

In a simple case, probabilities may be used. In a preferred embodiment, however, a respective probability distribution is assigned to each pair of head data cluster and frame data cluster. The probability distribution may be a Beta distribution. The Beta distribution is a family of continuous probability distributions defined on an interval $[0, 1]$ (the interval where probabilities are defined in mathematics) parametrized by two shape parameters, which will be referred to as a and b herein. The Beta distribution is for example described in "Beta distribution", in Wikipedia, The Free Encyclopedia. Retrieved 15:35, May 19, 2020, from https://en.wikipedia.org/w/index.php?title=Beta_distribution&oldid=955995606. A probability distribution with a peak at higher values in the interval $[0, 1]$ indicates a higher probability that the respective pair of head cluster and frame cluster indicates a higher probability of a good match, while a probability distribution with a peak at a lower value indicates a lower probability for a good match.

Various approaches may be used for obtaining such probabilities or probability distributions. For example, experts, for example opticians, may be asked to provide their assessment, and probabilities may be assigned based on this assessment, i.e. the probabilities opticians estimate. In other embodiments, images of a plurality of persons wearing glasses may be provided, and by image processing the frames may be extracted from the images. Frame extraction from images is for example described in Wu Chenyu et al., IEEE Transactions on Pattern Analysis and Machine Intelligence, vol. 26, No. 3, pp. 322-336. The images of the heads without the frames may then be assigned to head data clusters, and the extracted frames may be assigned to frame data clusters. The number of pairs of frames and heads assigned to the different combinations of head data clusters and frame data clusters may be counted, and the probability may be assigned on the count. For example, if, of 100 random persons wearing frames who have a head which is assigned to head data cluster A, 70 wear frames assigned to frame data cluster 1, 20 wear frames assigned to frame cluster 2, and 10 wear frames assigned to frame cluster 3, in a simple case p(A,1) could be set to 0.7, p(A,2) to 0.2 and p(A,3) to 0.1. However, while these are the probabilities resulting from the sample of the 100 random persons, these may deviate from the "true" probabilities, which are unknown (as e.g.), it is not possible to sample the complete population. This can be reflected by using probability distributions. For example, in case probability distributions like Beta distributions are used, p(A, 1) in the example above would have a peak at 0.7, p(A,2) at 0.2 and p(A,3) at 0.1, i.e. at the "most likely" probability in the interval [0,1] based on the information (e.g. sample of 100 persons) available. A width of the respective peak indicates a "reliability" of the respective value. If exact probabilities were known, the peaks would be delta functions at the respective probability.

A further possibility to obtain probabilities would be by conducting a survey across a higher number of people, i.e. a high number of people would be asked to select and try a frame, and based on this selection probabilities are established similar to the establishing based on images above.

As will be explained below, these probabilities in some embodiments are adjusted and refined based on the use of the thus configured frame selection device. Therefore, in other embodiments, uniform probabilities may be provided as an initial mapping. This means that initially the thus configured device will have a comparatively high likelihood of giving non-appropriate recommendations for frames, but with longer use of the frame selection device selections may be improved.

The above-described computer-implemented methods may be provided in form of a computer program containing instructions with, when carried out on a processor, causes execution of any of the above-described methods. A corresponding device, including a processor on which the computer program runs (for example by storing the computer program in a memory of the device) is also provided. In other words, such a device may comprise means for performing the steps of any of the above-described methods.

In some embodiments, additional head data may be added to the plurality of head data clusters, for example when additional data becomes available. Additionally or alternatively, additional frame data may be added to the plurality of frame data clusters, this adding of new head data or new frame data may be performed similarly to the forming of frame data clusters and head data clusters, respectively, described above: the new head data or frame data may be compressed, and then assigned to one of the frame data clusters or head data clusters, respectively, based on a similarity criterion. In this way, the clusters may be updated continuously, for example also when new frame modes become available.

In some embodiments, the mapping may include probabilities forming probability distributions as explained above. In this case, selecting the frame data cluster may be based on the probabilities. This enables an easy selection.

In some embodiments, the selection may be based according to a Bayesian multi-armed bandit approach. The multi-armed bandit problem in probability theory describes a problem in which a fixed limited set of resources (a finite number of customers wanting to buy a frame) must be allocated between competing choices (alternative choices frames from the various frame data clusters) in a way that the expected gain (selecting a fitting frame, which then may be bought by the person) is maximized.

Various solution algorithms to this problem are known in the art and may be applied.

One particular approach is the Bayesian Bandits approach, which is for example explained in Rahul Agarwal, Bayesian Bandits Explained Simply, July 19, 2019, published on https://towardsdatascience.com or in H. Robbins. Some aspects of the sequential design of experiments. Bulletin of the American Mathematical Society, (58):527-535, 1952. In this case, for the selection, Beta distributions as explained above are used to model the probabilities of the mapping. The selection is then based on the Beta distributions.

Essentially, this means that a frame data cluster having a higher probability associated therewith is selected more often than other frame clusters. In the very simple example given above, with three probabilities p(A,1) = 0.7, p(A,2) = 0.2 and p(A,3) = 0.1, if head data cluster A is identified based on the head data of the person, frame data cluster 1 would be selected about 70 % of the time, frame data cluster 2 would be selected about 20 % of the time and frame data cluster 3 would be selected about 10 % of the time. In case of probability distributions, the distributions are sampled for each pair of the identified head data cluster and a respective one of the frame data clusters, for examples distributions p(A,1), p(A,2) and p(A,3) in the example above. "Sampling" means that a value in the interval [0, 1] is determined based on the probability distribution, where e.g. a value of a peak has the highest probability of being sampled, but other values may result as well from the sampling. In other words, the probability for each value in the interval [0, 1] being sampled is given by the respective probability distribution. The frame data cluster for which the highest value was sampled is then selected.

In an embodiment, the method further comprises updating the mapping based on feedback of the person. The feedback from the person may be an indication from the person that a selected frame was a good fit to his head, that the person bought the frame (which also indicates a good fit), that the person liked the frame or similar feedback. In a simple approach, if the person gives positive feedback (for example that the person bought the frame) a probability that for the identified head data cluster the selected frame data cluster is selected in the future is increased, and a negative feedback decreases this probability. In an implementation using the Bayesian multi-armed bandit algorithm as explained above, also this updating may be performed according to the Bayesian multi-armed bandit algorithm. Here, with the use of the Beta distribution, the updating may be according to

$$Beta_{posterior}(a_{posterior},\ b_{posterior}) = Beta_{prior}\ (a_{prior},\ b_{prior})\ x\ Beta_{update}(a_{update},\ b_{update})\ (1).$$

$Beta_{posterior}$ is the updated Beta distribution which is updated based on the feedback mentioned above, with parameters $a_{posterior}$ and $b_{posterior}$, $Beta_{prior}$ is the Beta distribution before the update (i.e. the Beta distribution based on which the frame selections for which feedback is received were made), with parameters $a_{prior}$ and $b_{prior}$, and $Beta_{update}$ is a Beta distribution reflecting the feedback, as explained further below, with parameters $a_{update}$ and $b_{update}$. The updating according to the above formula (1) may be performed by a simple addition of the parameters, i.e.:

$$a_{posterior} =\ a_{prior} + a_{update}\ (2),$$

and

$$b_{posterior} =\ b_{prior} + b_{update}\ (3).$$

In a simple approach, $a_{update}$ and $b_{update}$ may be determined based on a number s of actually sold frames for a number of selections of a frame data cluster n, i.e. for n selections of a frame data cluster based on the above method, s times a corresponding frame was sold to the person. In this case, $a_{update}$=s and $b_{update}$=n-s.

In another approach, a behavior of the person may be evaluated in more detail. For example, the frames of the selected frame data cluster may be presented to the person. The person may then for example view, like, dislike, try on (e.g. virtually on a screen) or buy the frame. Each of these actions may be assigned a score, and $a_{update}$ and $b_{update}$ may be calculated based on the scores assigned to the actions the person actually performed. As one non-limiting example, a view of the person may be assigned as a: -1; a good anatomical fit a: 3; a bad anatomical fit a: - 3; a virtual try on a: 10; and a buy a: 20. The overall score for a selection is then the sum of all scores for the action a user performs. If a person first views, then tries on and then buys the frame, then the frame provides a good anatomical fit, the overall score is -1+3+10+20, which in this case is the maximum score of 32. As another non-limiting example, a view may be assigned a: -1; a like a: 3; a dislike a: -3; a virtual try on a: 10; and a buy a: 20. The overall score for a selection is then the sum of all scores for the action a user performs. If a person first views, then likes, then tries on and then buys the frame, the overall score is -1+3+10+20, which in this case is the maximum score of 32. For the updating according to equations (2) and (3), $a_{update}$ is set to the overall score and $b_{update}$ is set to the maximum score minus the overall score.

In an embodiment, the method may further comprise providing a head color of the person. A head color is a color of any part of the head and may for example be or comprise an eye color, a hair color, a facial hair color and/or a skin color. In case the head data of the person is a 2D image, the head color may for example be extracted from the 2D image by image processing. The selecting may then be modified based on the head color. This may be done before or after the selecting a frame data cluster of a plurality of frame data clusters based on the identified head data clusters and a mapping.

Before the selecting, the modifying may be performed by modifying probabilities or probability distributions of the mapping and performing the selecting based on modified probabilities or modified probability distributions. For example, combinations of head color and color of frames in a cluster may also be assigned to a certain value (higher values for good matches), and the probabilities or sampled values based on probability distributions of the mapping may be multiplied by those values.

After the selecting, the frames of the selected frame data cluster may then be filtered based on the head color(s) and colors of the frames in the frame data cluster, such that only frames with a color appropriate for the head color of the persons are recommended. Which frame colors are appropriate for which head color may for example be preconfigured based on experience, and/or may also be updated based on user feedback as explained above. In this way, the selection of frames will be further refined.

As mentioned above, a good physical fit, for example correct width of the frame or correct length of temple arms of the frame, is a prerequisite that the person is comfortable with a particular frame. In particular when the updating mentioned above is used, the probability that frames are recommended which do not have a good physical fit may be reduced. Nevertheless, to further improve physical fit, an additional modifying of the selecting may be used. In such an embodiment, the method may further comprise:

> providing head dimensions of the person, and
> modifying the selecting based on the head dimensions.

As with the head color, the modifying may be performed before the selecting (e.g. by modifying the mapping as discussed for the head color) or after the selecting (by filtering as also discussed for the head color).

Head dimensions in particular may include a temple width of the head (distance between left and right temple) or a distance between a plane approximating the face and the ears, which correlate with the temple arm length of a frame needed.

In this way, in the probability that a recommended frame fits the head of the person may be further increased. It should be noted that this is an optional feature, and the method of the invention also works without providing these head dimensions. The filtering may then lead to only frames fitting the corresponding head dimensions, for example regarding their frame width and their temple arm length, being recommended.

Optionally, the method may further comprise a filtering based on user preferences. In this way, the user may input information about which frame he/she actually prefers, for example regarding color of the frame, brand of the frame, price range of the frame or similar parameters. This may further increase the probability of recommending a frame that the user would actually want to buy.

Also for the method of recommending a frame, corresponding computer programs, data carriers, data carrier signals and correspondingly programmed devices may be provided. It should be noted that in some embodiments the plurality of head data clusters and the plurality of frame data clusters may be provided within the device. In other embodiments, these clusters may be provided remotely in a database accessible via the internet. Also the above-described updating then may update the remote database. In such a case, the database may be a common database updated by a plurality of devices, which may help to improve the accuracy of the recommendation. Also the mapping may be provided in the remote database. In case of a common database, this may be for a certain region (like town, part of town, country, continent etc.). Limiting the database and in particular the mapping to a certain region may improve the accuracy for that region.

Further embodiments will be discussed referring to the attached drawings, wherein

Fig. 1 is a block diagram of a device according to an embodiment,

Fig. 2 is a flowchart illustrating a method according to an embodiment,

Figs. 3 and 4 are diagrams illustrating examples for compression,

Fig. 5 is a diagram illustrating clustering of frame data,

Fig. 6 is a diagram illustrating clustering of head data,

Fig. 7 is a diagram illustrating an example of a mapping between head data clusters and frame data clusters, and

Fig. 8 is a flowchart illustrating a method according to an embodiment.

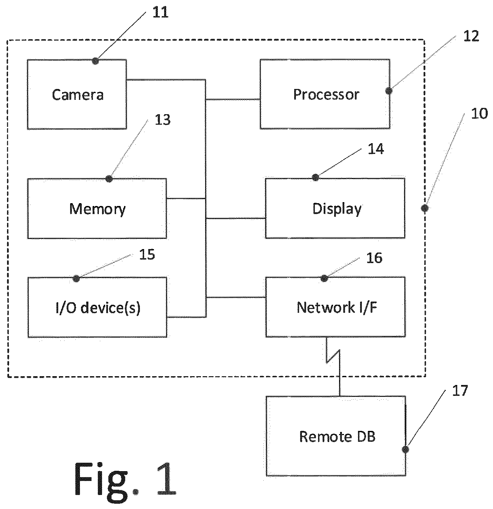

Turning now to the Figures, Fig. 1 is a block diagram of a device 10 according to an embodiment.

Device 10 is a computer comprising a processor 12, memory 13, display 14, one or more input/output devices 15 and network interface 16 interconnected with each other. For example, device 10 may be a commercially available computer device like a personal computer, a laptop, a tablet PC, a smartphone or the like. Processor 12 may include one or more processors, each including one or more processor cores. Memory 13 may comprise various types of memories like random access memory (RAM), read only memory (ROM), cache memory of processor 12, flash memory, or other storage devices like a hard disk, or a solid-state-drive (SSD). In memory 13, program code comprising instructions may be stored which causes execution of the methods discussed below. Display 14 may include a touchscreen which is also used for inputting data. Input/output devices 15 may for example include a keyboard, a loudspeaker, or a mouse. Network interface 16 made provide connection to the Internet in a wireless or wire-based manner.

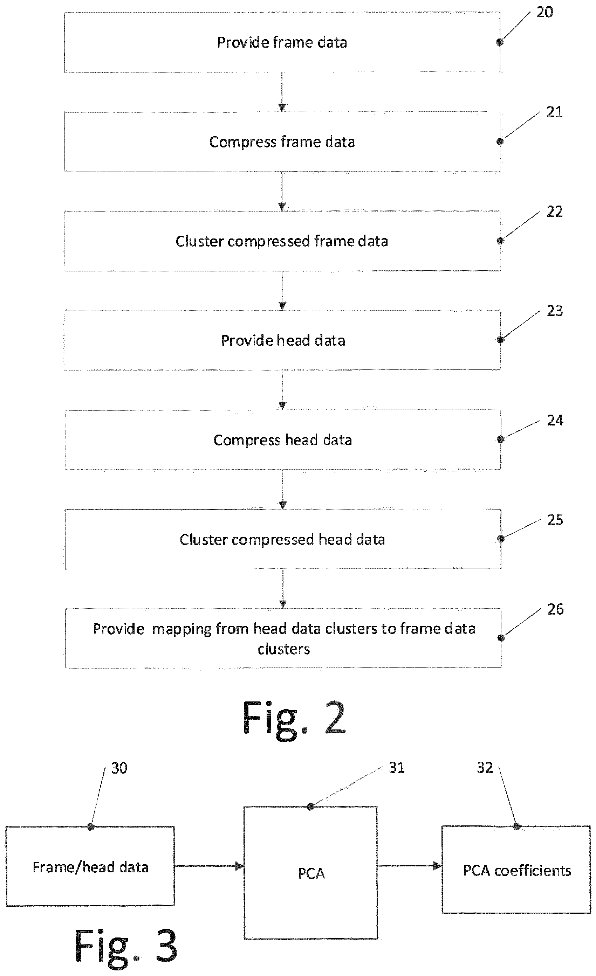

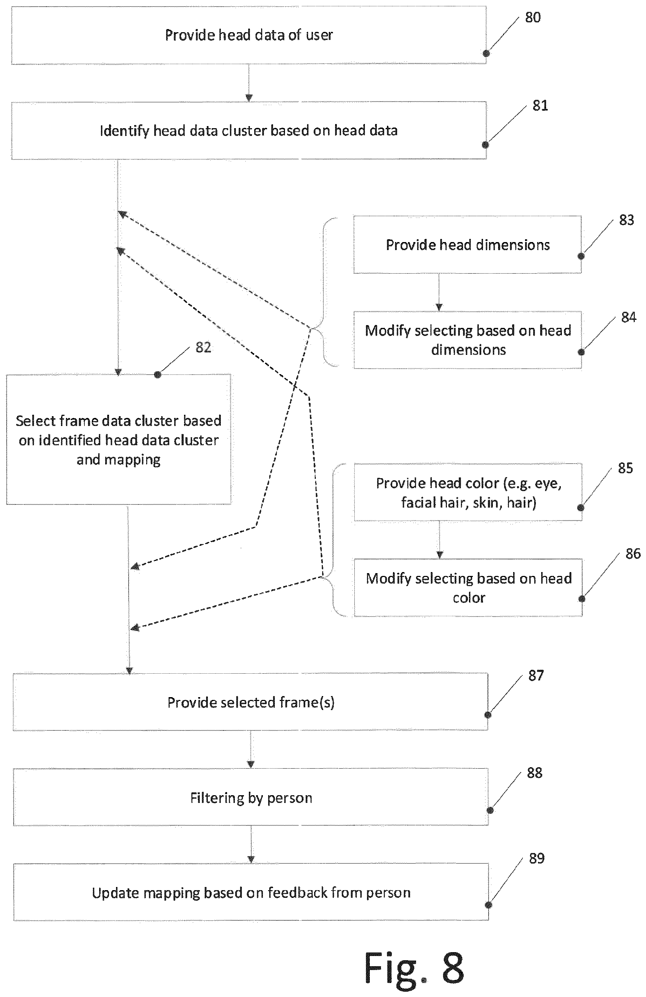

Such a device may be used for implementing the configuration method discussed below with reference to Fig. 2 or may be a device for frame selection using the method discussed below with respect to Fig. 8. Particularly, in the latter case, device 10 may include a camera 11 for obtaining a 2D image of a head of a user. Such a camera 11 is included in many commercially available computer devices like laptops, table PCs or smartphones. In other embodiments, camera 11 may be externally provided and connected to computer device 10.

In case device 10 is used for frame recommendation as will be discussed in connection with Fig. 8, network interface 16 may be used to connect device 10 to a remote database 17 where head data clusters, frame data clusters and a mapping therebetween are stored. In other embodiments, such frame data clusters, head data clusters and a mapping therebetween may be stored in memory 13.

Fig. 2 is a flowchart illustrating a method for configuring a device for frame recommendation according to an embodiment.

At 20, the method comprises providing frame data for a plurality of frames. As mentioned previously, frame data may take different forms like 2D images, 3D images or CAD data.

At 21, the method comprises compressing the frame data.

At 22, the method comprises clustering the compressed frame data to form a plurality of frame data clusters.

Likewise, at 23 the method comprises providing head data for a plurality of heads, for example 2D images.

At 24, the method comprises compressing the head data.

At 25, the method comprises clustering the compressed head data to form a plurality of head data clusters.

At 26, the method comprises providing a mapping from the head data clusters to the frame data clusters.

Various steps of the method of Fig. 2 will now be illustrated referring to Figs. 2-7.

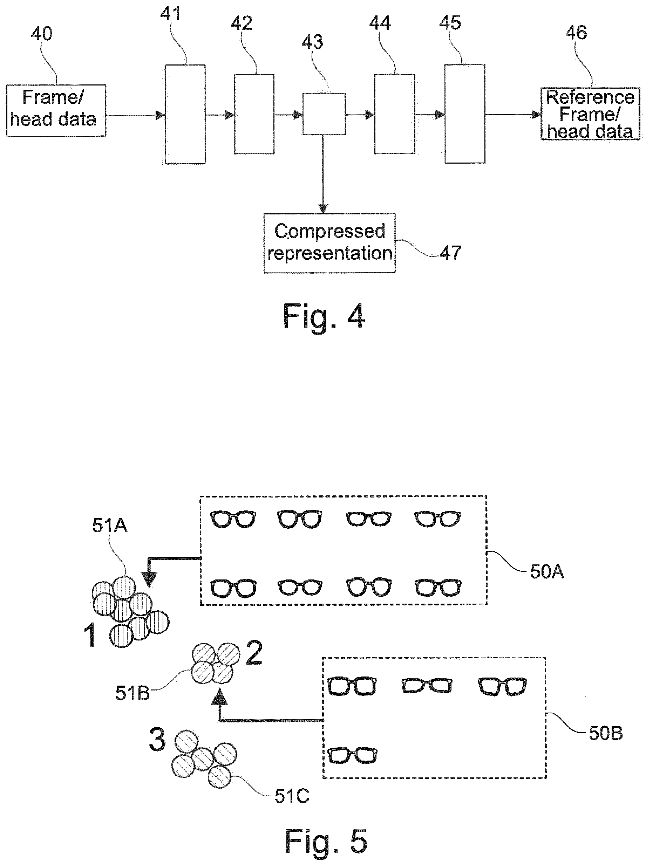

Figs. 3 and 4 show two possible approaches for compressing frame data at 21 or compressing head data at 24. In Fig. 3, a principal component analysis (PCA) is used. Here, frame data or head data 30 is subjected to a principal component analysis 31. The results are principal component analysis coefficients (PCA coefficients) 32, which represent the frame data or head data in compressed form, i.e. by the coefficients only. As explained further above, the coefficients define linear combinations of a plurality of templates (the principal components).

In Fig. 4, an example for a compression using a convolutional neural network (CNN) is illustrated, the CNN is not part of the claimed subject-matter.

Frame data or head data 40 is provided to a convolutional neural network including layers 41-45. It should be noted that layers 41-45 serve merely as an example, and more layers may be provided. Layer 41 serves as an input layer. From layers 41-43, a spatial compression of the data is performed, i.e. the data is represented by less and less numerical values from layer to layer. Layer 43, where a maximum compression is present, is also sometimes referred to as bottleneck. From layer 43 to an output layer 45, spatial expansion occurs, and layer 45 outputs reference frame/head data 46.

During training, coefficients between layers 41-45 are adapted and trained using training frame data or training head data such that the output reference frame data or reference head data essentially corresponds to the input training frame data or training head data. "Essentially corresponds" means that the deviations are smaller than a predefined value. When the neural network is trained that way, this means that when frame data or head data is input to the neural network, numerical values present in bottleneck 43 constitute a compressed representation 47 of the frame data or head data.

As mentioned further above in the general discussion, these are merely two examples for compression methods, and other compression methods may also be used.

Fig. 5 illustrates the clustering of compressed frame data at 22 in Fig. 2. Here, based on a similarity criterion between the compressed frame data, frames represented by the frame data are grouped together in clusters. In the example of Fig. 5, frames 50A, which have similar shapes, forms and dimensions, are grouped together in a cluster 55A (cluster 1), and frames 50B which are also similar to each other according to the similarity criterion are grouped together in a cluster 51B (cluster 2). It should be noted that the differences of frame shapes shown for frames 50A, 50B is merely for illustration purposes, and in some embodiments frames grouped together in a cluster may be more or less similar to each other. For illustration purposes, frames 50A have rounder rims, while frames 50B have more angular rims. Further frames (not shown in Fig. 5) are grouped into a cluster 51C (cluster 3). The number of three cluster 51A-51C in Fig. 5 is merely an example for ease of understanding, and depending on the number of frames for which frame data is available, and their similarities, other numbers of clusters may be formed.

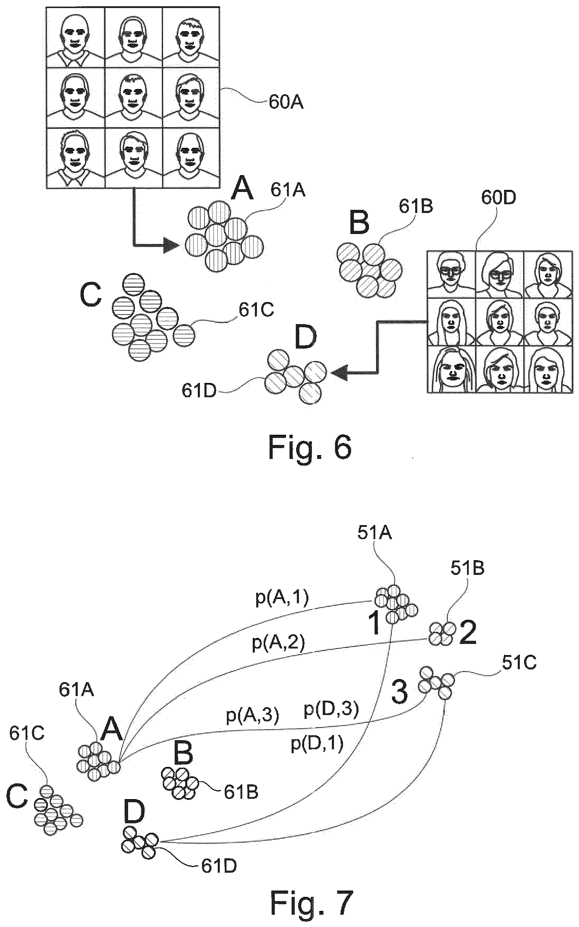

Fig. 6 shows a schematic example for the clustering of the compressed head data at 25 in Fig. 2. In the example of Fig. 6, head data corresponding to heads 60A are clustered to a head data cluster 61A (cluster A). Heads in a cluster may have similar shapes, similar proportions (for example similar relative distances between elements of the face), same gender, same ethnicity and the like. Head data corresponding to heads 60D are clustered in a head data cluster 61D (cluster D). Other head data may be clustered in a head data cluster 61B (cluster B) or in a head data cluster 61C (cluster C). The number of nine heads 60A and nine heads 60D as well as the number of four head data clusters again serves only as an example. In particular, different numbers of head data may be clustered in different clusters, depending on how many sets of head data for heads fulfilling a respective similarity criterion are available.

Fig. 7 illustrates an example for a mapping provided at 26 of Fig. 2, where head data clusters 61A to 61D of Fig. 6 and frame data clusters 51A to 51C of Fig. 5 are used as an example. The arrows between head data clusters and frame data clusters illustrate such a mapping, each assigned with a respective probability p(A,1), p(A,2), p(A,3), p(D,1) and p(D,3) in the example of Fig. 7. It should be noted that such a correction with an assigned probability may go from each head data cluster to each frame data cluster, but only some mappings are shown in Fig. 7 for clarity's sake.

Once the frame data clusters, head data clusters and mapping are provided, a correspondingly configured device may be used for frame recommendation. A corresponding method, which will be discussed referring to Fig. 8, may be implemented in device 10 of Fig. 1. The head data clusters, frame data clusters and mapping may be stored in remote database 17, but may also be stored in memory 13.

At 80 in Fig. 8, the method comprises providing head data of a person. Returning to Fig. 1, this may be done by taking an image of the head of the person using camera 11.

At 81, the method comprises identifying a head data cluster based on the head data. To this end, the head data may be compressed as at 24 in Fig. 2, and then an appropriate head cluster may be used based on the similarity criterion. For example, if the head of the person is similar to heads 60A, likely cluster 61A will be identified. If the head of the person is similar to the heads 60D, likely cluster 61D will be identified.

At 82, the method comprises selecting a frame data cluster based on the head data cluster identified at 81 and the mapping between the head data clusters and frame data clusters. For example, if at 81 head data cluster 61A of Figs. 6 and 7 is identified, a frame data cluster is selected based on probabilities p(A,1), p(A,2) and p(A,3).

In the following steps 83-86, this selection may be modified. As indicated by dashed arrows in Fig. 8, and as already explained above, this modifying may be performed before or after the selecting at 82.

At 83, the method of Fig. 8 comprises providing head dimensions of the person, and at 84 the method comprises modifying the selecting based on the provided head dimensions. This may increase the probability that recommended frames fit the user.

At 85, the method comprises providing a head color of the person. The head color may be input or may be extracted from the head data provided at 80, for example 2D image, based on image analysis techniques.

At 86, the method may comprise modifying the selecting based on the head color. For example, certain colors usually are regarded as a bad match, and a probability of selecting frames having a color being a bad match for the head color may be reduced.

The frames of the selected cluster resulting from this modifying at 84 and 86 may be provided as recommendations to the person at 87. These recommendations, at 88, may be further filtered by the user based on personal preferences, for example color, brand, type or the like.

At 89, the method may comprise updating the mapping based on feedback from the person. This may be done, as explained above, based on the Bayesian multi-armed bandit algorithm. Essentially, when the person for example selects or buys one of the selected frames, the associated mapping between head data cluster and frame data cluster may be modified to increase the probability that the respective frame data cluster is selected for the respective head data cluster. If the person does not select any of the recommended frames, correspondingly the mapping may be modified to decrease the probability.

In cases where the head data clusters, frame data clusters and mapping are stored in remote database 17, the updating may be performed from a plurality of devices accessing database 17 for frame selection.

**Claims**

1. A computer-implemented method for configuring a device (10) for frame recommendation to recommend a frame with a good physical fit for a person, comprising:

   providing frame data for a plurality of frames (50A, 50B),
   providing head data for a plurality of heads, and
   recommending the frame for a head of the person based on a probability between the head data and the frame data,
   **characterized by**
   providing a plurality of head data clusters (61A, 61B, 61C, 61D), wherein a head data cluster is a group of head data grouped together based on a similarity criterion;
   providing a plurality of frame data clusters (51A, 51B, 51C), wherein a frame data cluster is a group of frame data from different frames grouped together based on another similarity criterion;
   providing a mapping between the head data clusters (61A, 61B, 61C, 61D) and the frame data clusters (51A, 51B, 51C),
   identifying one of the head data clusters (61A, 61B, 61C, 61D) based on head data of the person, and
   selecting the frame from the frame data cluster (51A, 51B, 51C) mapped with the identified head data cluster (61A, 61B, 61C, 61D),
   wherein providing the plurality of frame data clusters (51A, 51B, 51C) comprises:

      compressing the frame data; and
      clustering the compressed frame data based on the another similarity criterion to provide the plurality of frame data clusters (51A, 51B, 51C),
      further **characterized in that** compressing the frame data comprises:

         - compressing the frame data using a principal component analysis, wherein the another similarity criterion is that frame data is identified as belonging to the same cluster if a deviation for lower order coefficients resulting from the principal component analysis is below a predefined threshold.

2. The method of claim 1, **characterized in that** providing the mapping comprises assigning one of probabilities or probability distributions to pairs, each pair including a head data cluster of the plurality of head data clusters (61A, 61B, 61C, 61D) and a frame data cluster of the plurality of frame data clusters (51A, 51B, 51C).

3. A computer program comprising instructions which, when carried out on at least one processor, cause execution of the method of any one of claims 1 or 2.

4. A device (10) comprising a processor and stored instructions which, when carried out by the processor, cause execution of a method for configuring the device (10) for frame recommendation to recommend a frame with a good physical fit for a person which comprises:

  providing frame data for a plurality of frames (50A, 50B),
  providing head data for a plurality of heads, and
  recommending the frame for a head of the person based on a probability between the head data and the frame data,
  **characterized by**
  providing a plurality of head data clusters (61A, 61B, 61C, 61D), wherein a head data cluster is a group of head data grouped together based on a similarity criterion;
  providing a plurality of frame data clusters (51A, 51B, 51C) , wherein a frame data cluster is a group of frame data from different frames grouped together based on another similarity criterion;
  providing a mapping between the head data clusters (61A, 61B, 61C, 61D) and the frame data clusters (51A, 51B, 51C),
  identifying one of the head data clusters (61A, 61B, 61C, 61D) based on head data of the person, and
  selecting the frame from the frame data cluster (51A, 51B, 51C) mapped with the identified head data cluster (61A, 61B, 61C, 61D),
  wherein providing the plurality of frame data clusters (51A, 51B, 51C) comprises:

    compressing the frame data; and
    clustering the compressed frame data based on the another similarity criterion to provide the plurality of frame data clusters (51A, 51B, 51C),
    further **characterized in that** compressing the frame data comprises:

      - compressing the frame data using a principal component analysis, wherein the another similarity criterion is that frame data is identified as belonging to the same cluster if a deviation for lower order coefficients resulting from the principal component analysis is below a predefined threshold.

**Patentansprüche**

1. Computerimplementiertes Verfahren zum Konfigurieren einer Vorrichtung (10) zur Gestellempfehlung, um ein Gestell mit einer guten physischen Passform für eine Person zu empfehlen, Folgendes umfassend:

  Bereitstellen von Gestelldaten für eine Mehrzahl von Gestellen (50A, 50B),
  Bereitstellen von Kopfdaten für eine Mehrzahl von Köpfen und
  Empfehlen des Gestells für den Kopf der Person basierend auf einer Wahrscheinlichkeit zwischen den Kopfdaten und den Gestelldaten,
  **gekennzeichnet durch**
  Bereitstellen einer Mehrzahl von Kopfdatenclustern (61A, 61B, 61C, 61D), wobei ein Kopfdatencluster eine Gruppe von Kopfdaten ist, die basierend auf einem Ähnlichkeitskriterium zusammengefasst sind;
  Bereitstellen einer Mehrzahl von Gestelldatenclustern (51A, 51B, 51C), wobei ein Gestelldatencluster eine Gruppe von Gestelldaten von verschiedenen Gestellen ist, die basierend auf einem anderen Ähnlichkeitskriterium zusammengefasst sind;
  Bereitstellen einer Zuordnung zwischen den Kopfdatenclustern (61A, 61B, 61C, 61D) und den Gestelldatenclustern (51A, 51B, 51C),
  Identifizieren eines der Kopfdatencluster (61A, 61B, 61C, 61D) basierend auf Kopfdaten der Person und
  Auswählen des Gestells aus dem Gestelldatencluster (51A, 51B, 51C), der dem identifizierten Kopfdatencluster (61A, 61B, 61C, 61D) zugeordnet ist,
  wobei Bereitstellen der Mehrzahl von Gestelldatenclustern (51A, 51B, 51C) Folgendes umfasst:

Komprimieren der Gestelldaten; und
eine Clusteranalyse der komprimierten Gestelldaten basierend auf dem anderen Ähnlichkeitskriterium, um die Mehrzahl von Gestelldatenclustern (51A, 51B, 51C) bereitzustellen,
ferner **dadurch gekennzeichnet, dass** Komprimieren der Gestelldaten umfasst:

- Komprimieren der Gestelldaten unter Verwendung einer Hauptkomponentenanalyse, wobei das andere Ähnlichkeitskriterium darin besteht, dass die Gestelldaten als zu demselben Cluster zugehörig identifiziert werden, wenn eine Abweichung für Koeffizienten niedrigerer Ordnung, die sich aus der Hauptkomponentenanalyse ergibt, unterhalb eines vordefinierten Schwellenwerts liegt.

2. Verfahren nach Anspruch 1, **dadurch gekennzeichnet, dass** Bereitstellen der Zuordnung Zuweisen von Wahrscheinlichkeiten und/oder Wahrscheinlichkeitsverteilungen zu Paaren umfasst, wobei jedes Paar einen Kopfdatencluster der Mehrzahl von Kopfdatenclustern (61A, 61B, 61C, 61D) und einen Gestelldatencluster der Mehrzahl von Gestelldatenclustern (51A, 51B, 51C) beinhaltet.

3. Computerprogramm, umfassend Anweisungen, die, wenn sie auf mindestens einem Prozessor ausgeführt werden, die Ausführung des Verfahrens nach einem der Ansprüche 1 oder 2 bewirken.

4. Vorrichtung (10), umfassend einen Prozessor und gespeicherte Anweisungen, die, wenn sie durch den Prozessor ausgeführt werden, die Ausführung eines Verfahrens zum Konfigurieren der Vorrichtung (10) zur Gestellempfehlung bewirken, um ein Gestell mit einer guten physischen Passform für eine Person zu empfehlen, das Folgendes umfasst:

Bereitstellen von Gestelldaten für eine Mehrzahl von Gestellen (50A, 50B),
Bereitstellen von Kopfdaten für eine Mehrzahl von Köpfen und
Empfehlen des Gestells für den Kopf der Person basierend auf einer Wahrscheinlichkeit zwischen den Kopfdaten und den Gestelldaten,
**gekennzeichnet durch**
Bereitstellen einer Mehrzahl von Kopfdatenclustern (61A, 61B, 61C, 61D), wobei ein Kopfdatencluster eine Gruppe von Kopfdaten ist, die basierend auf einem Ähnlichkeitskriterium zusammengefasst sind;
Bereitstellen einer Mehrzahl von Gestelldatenclustern (51A, 51B, 51C), wobei ein Gestelldatencluster eine Gruppe von Gestelldaten von verschiedenen Gestellen ist, die basierend auf einem anderen Ähnlichkeitskriterium zusammengefasst sind;
Bereitstellen einer Zuordnung zwischen den Kopfdatenclustern (61A, 61B, 61C, 61D) und den Gestelldatenclustern (51A, 51B, 51C),
Identifizieren eines der Kopfdatencluster (61A, 61B, 61C, 61D) basierend auf Kopfdaten der Person und
Auswählen des Gestells aus dem Gestelldatencluster (51A, 51B, 51C), der dem identifizierten Kopfdatencluster (61A, 61B, 61C, 61D) zugeordnet ist,
wobei Bereitstellen der Mehrzahl von Gestelldatenclustern (51A, 51B, 51C) Folgendes umfasst:

Komprimieren der Gestelldaten; und
eine Clusteranalyse der komprimierten Gestelldaten basierend auf dem anderen Ähnlichkeitskriterium, um die Mehrzahl von Gestelldatenclustern (51A, 51B, 51C) bereitzustellen,
ferner **dadurch gekennzeichnet, dass** Komprimieren der Gestelldaten umfasst:

- Komprimieren der Gestelldaten unter Verwendung einer Hauptkomponentenanalyse, wobei das andere Ähnlichkeitskriterium darin besteht, dass die Gestelldaten als zu demselben Cluster zugehörig identifiziert werden, wenn eine Abweichung für Koeffizienten niedrigerer Ordnung, die sich aus der Hauptkomponentenanalyse ergibt, unterhalb eines vordefinierten Schwellenwerts liegt.

## Revendications

1. Procédé mis en œuvre par ordinateur pour configurer un dispositif (10) de recommandation de monture afin de recommander une monture présentant un bon ajustement physique pour une personne, comprenant :

la fourniture de données de monture pour une pluralité de montures (50A, 50B),
la fourniture de données de tête pour une pluralité de têtes, et
la recommandation de la monture pour une tête de la personne sur la base d'une probabilité entre les données de tête et les données de monture,

**caractérisé par**

la fourniture d'une pluralité de groupes de données de tête (61A, 61B, 61C, 61D), un groupe de données de tête étant un groupe de données de tête regroupées sur la base d'un critère de similarité ;

la fourniture d'une pluralité de groupes de données de monture (51A, 51B, 51C), un groupe de données de monture étant un groupe de données de monture provenant de différentes montures regroupées sur la base d'un autre critère de similarité ;

la fourniture d'une mise en correspondance entre les groupes de données de tête (61A, 61B, 61C, 61D) et les groupes de données de monture (51A, 51B, 51C),

l'identification d'un des groupes de données de tête (61A, 61B, 61C, 61D) sur la base des données de tête de la personne, et

la sélection de la monture dans le groupe de données de monture (51A, 51B, 51C) mis en correspondance avec le groupe de données de tête identifié (61A, 61B, 61C, 61D),

la fourniture de la pluralité de groupes de données de monture (51A, 51B, 51C) comprenant :

la compression des données de monture ; et

le regroupement des données de monture comprimées sur la base de l'autre critère de similarité pour fournir la pluralité de groupes de données de monture (51A, 51B, 51C),

**caractérisé en outre en ce que** la compression des données de monture comprend :

- la compression des données de monture à l'aide d'une analyse en composantes principales, l'autre critère de similarité étant que les données de monture sont identifiées comme appartenant au même groupe si un écart pour des coefficients d'ordre inférieur résultant de l'analyse en composantes principales est inférieur à un seuil prédéfini.

2. Procédé selon la revendication 1, **caractérisé en ce que** la fourniture de la mise en correspondance comprend l'affectation de l'une des probabilités ou distributions de probabilités à des paires, chaque paire comprenant un groupe de données de tête de la pluralité de groupes de données de tête (61A, 61B, 61C, 61D) et un groupe de données de monture de la pluralité de groupes de données de monture (51A, 51B, 51C).

3. Programme informatique comprenant des instructions qui, lorsqu'elles sont mises en œuvre sur au moins un processeur, amènent l'exécution du procédé selon l'une quelconque des revendications 1 ou 2.

4. Dispositif (10) comprenant un processeur et des instructions mémorisées qui, lorsqu'elles sont mises en œuvre par le processeur, amènent l'exécution d'un procédé de configuration du dispositif (10) pour la recommandation de monture afin de recommander une monture présentant un bon ajustement physique pour une personne, ledit dispositif comprenant :

la fourniture de données de monture pour une pluralité de montures (50A, 50B),

la fourniture de données de tête pour une pluralité de têtes, et

la recommandation de la monture pour une tête de la personne sur la base d'une probabilité entre les données de tête et les données de monture,

**caractérisé par**

la fourniture d'une pluralité de groupes de données de tête (61A, 61B, 61C, 61D), un groupe de données de tête étant un groupe de données de tête regroupées sur la base d'un critère de similarité ;

la fourniture d'une pluralité de groupes de données de monture (51A, 51B, 51C), un groupe de données de monture étant un groupe de données de monture provenant de différentes montures regroupées sur la base d'un autre critère de similarité ;

la fourniture d'une mise en correspondance entre les groupes de données de tête (61A, 61B, 61C, 61D) et les groupes de données de monture (51A, 51B, 51C),

l'identification d'un des groupes de données de tête (61A, 61B, 61C, 61D) sur la base des données de tête de la personne, et

la sélection de la monture dans le groupe de données de monture (51A, 51B, 51C) mis en correspondance avec le groupe de données de tête identifié (61A, 61B, 61C, 61D),

la fourniture de la pluralité de groupes de données de monture (51A, 51B, 51C) comprenant :

la compression des données de monture ; et

le regroupement des données de monture comprimées sur la base de l'autre critère de similarité pour fournir la pluralité de groupes de données de monture (51A, 51B, 51C), **caractérisé en outre en ce que** la compression des données de monture comprend :

- la compression des données de monture à l'aide d'une analyse en composantes principales, l'autre critère de similarité étant que les données de monture sont identifiées comme appartenant au même groupe si un écart pour des coefficients d'ordre inférieur résultant de l'analyse en composantes principales est inférieur à un seuil prédéfini.

Fig. 1

20

Provide frame data

21

Compress frame data

22

Cluster compressed frame data

23

Provide head data

24

Compress head data

25

Cluster compressed head data

26

Provide mapping from head data clusters to frame data clusters

# Fig. 2

30

Frame/head data

31

PCA

32

PCA coefficients

# Fig. 3

Fig. 4

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130088490 A
- US 20130132898 A1
- US 5592248 A
- US 9810927 B1
- US 5983201 A
- WO 2016109884 A1
- US 20110314031 A1
- EP 3182362 A1
- US 2013006814 A1
- US 2001051953 A1

### Non-patent literature cited in the description

- **XIAOLING GU et al.** iGlasses: A Novel Recommendation System for Best-fit Glasses. *Proceedings of the 39th international ACM SIGIR Conference on Research and Development in Information Retrieval, SIGIR '16*, 17 July 2016
- **EDWIN COSTELLO et al.** i CARE: Intelligent Customer Assistance for Recommending Eyewear. *Proceedings of the 11th International Conference on Intelligent User Interfaces*, 01 February 2006, 282-284
- Multi-view face recognition using deep neural networks. **ZHAO FENG et al.** Future Generation Computer Systems. Elsevier Science Publishers, 15 May 2020, vol. 111, 375-380
- **STEFAN DUFFNER**. Face Image Analysis With Convolutional Neural Networks. *Dissertation*, 01 January 2007
- **L.J.P. VAN DER MAATEN** ; **G.E. HINTON**. Visualizing High-Dimensional Data Using t-SNE. *Journal of Machine Learning Research*, 09 November 2008, 2579-2605
- **JIAN YANG** ; **D. ZHANG** ; **A. F. FRANGI** ; **JING-YU YANG**. Two-dimensional PCA: a new approach to appearance-based face representation and recognition. *IEEE Transactions on Pattern Analysis and Machine Intelligence*, January 2004, vol. 26 (1), 131-137
- **PEARSON, K.** On Lines and Planes of Closest Fit to Systems of Points in Space. *Philosophical Magazine.*, 1901, vol. 2 (11), 559-572
- **BREIMAN L**. Random Forests. *Machine Learning*, 2001, vol. 45 (1), 5-32
- **M. BELKIN** ; **P. NIYOGI**. Laplacian Eigenmaps for Dimensionality Reduction and Data Representation. *Neural Computation*, June 2003, vol. 15 (6), 1373-1396
- **KRAMER** ; **MARK A**. Nonlinear principal component analysis using autoassociative neural networks. *PDF). AIChE Journal.*, 1991, vol. 37 (2), 233-243
- **SZU-HAO HUANG et al.** *Advanced Engineering Informatics*, vol. 21 (1), 35-45
- A Density-Based Algorithm for Discovering Clusters in Large Spatial Databases with Noise. **ESTER, M.** ; **H. P. KRIEGEL** ; **J. SANDER** ; **X. XU**. In Proceedings of the 2nd International Conference on Knowledge Discovery and Data Mining. AAAI Press, 1996, 226-231
- **MCLACHLAN, G.J** ; **BASFORD, K.E**. Mixture Models: inference and applications to clustering. *Statistics: Textbooks and Monographs*, 1988
- Some Methods for classification and Analysis of Multivariate Observations. **MACQUEEN, J. B.** Proceedings of 5th Berkeley Symposium on Mathematical Statistics and Probability. 1. University of California Press, 1967, 281-297
- Beta distribution. *Wikipedia, The Free Encyclopedia. Retrieved*, 19 May 2020, vol. 15 (35), https://en.wikipedia.org/w/index.php?title=Beta_distribution&oldid=955995606
- **WU CHENYU et al.** *IEEE Transactions on Pattern Analysis and Machine Intelligence*, vol. 26 (3), 322-336
- **RAHUL AGARWAL**. *Bayesian Bandits Explained Simply*, 19 July 2019, https://towardsdatascience.com
- **H. ROBBINS**. Some aspects of the sequential design of experiments. *Bulletin of the American Mathematical Society*, 1952 (58), 527-535